Europäisches Patentamt

European Patent Office

Office européen des brevets

(19)

(11) Veröffentlichungsnummer: **0 588 826 B1**

(12) **EUROPÄISCHE PATENTSCHRIFT**

(45) Veröffentlichungstag der Patentschrift: **19.07.95**

(51) Int. Cl.6: **B60K 41/22**

(21) Anmeldenummer: **92910591.4**

(22) Anmeldetag: **21.05.92**

(86) Internationale Anmeldenummer:
**PCT/EP92/01138**

(87) Internationale Veröffentlichungsnummer:
**WO 93/00228 (07.01.93 93/02)**

(54) **VERFAHREN ZUR SELBSTTÄTIGEN STEUERUNG EINER DREHZAHLWANDELNDEN ANFAHREINRICHTUNG EINES KRAFTFAHRZEUGS.**

(30) Priorität: **21.06.91 DE 4120602**

(43) Veröffentlichungstag der Anmeldung:
**30.03.94 Patentblatt 94/13**

(45) Bekanntmachung des Hinweises auf die Patenterteilung:
**19.07.95 Patentblatt 95/29**

(84) Benannte Vertragsstaaten:
**DE ES FR GB IT SE**

(56) Entgegenhaltungen:
**EP-A- 0 276 022**
**EP-A- 0 326 274**
**DE-A- 3 922 051**
**DE-C- 3 341 652**
**US-A- 4 622 865**

(73) Patentinhaber: **Dr.Ing.h.c. F. Porsche Aktiengesellschaft**
**Porschestrasse 42**
**D-70435 Stuttgart (DE)**

(72) Erfinder: **PETERSMANN, Joseph**
**Eichenweg 6**
**D-7251 Wimsheim (DE)**
Erfinder: **SEIDEL, Willi**
**Theodor-Heuss-Strasse 101**
**D-7147 Eberdingen-Hochdorf (DE)**
Erfinder: **STEHLE, Heinz**
**Jakobsäcker 4**
**D-7251 Weissach (DE)**
Erfinder: **MÖLLERS, Werner**
**Rembrandtstrasse 9**
**D-7135 Wiernsheim (DE)**
Erfinder: **HICKMANN, Udo**
**Götzentor 8/4**
**D-7130 Mühlacker (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung betrifft ein Verfahren nach der Gattung des Hauptanspruchs.

Bei Kraftfahrzeugen mit manuell betätigter Anfahreinrichtung (Reibungskupplung) kann der Fahrer durch geeignete Betätigung von Fahrpedal und Kupplungspedal einen Anfahrvorgang innerhalb der physikalischen Systemgrenzen nahezu frei gestalten. Es wird ihm dadurch ermöglicht, die Dynamik des Anfahrvorgangs individuell an seinen Fahrstil oder eine gerade vorherrschende Fahr- oder Verkehrssituation anzupassen.

Der Fahrer wird daher die Anfahrdrehzahl der Brennkraftmaschine und den Schlupf der Kupplung mittels Fahrpedal und Kupplung so einstellen, daß die Brennkraftmaschine das entsprechende Anfahrmoment bzw. die entsprechende situationsgerechte Anfahrleistung erzeugt.

Die richtige und insbesondere verschleißarme Steuerung von Fahrpedal und Kupplungspedal durch den Fahrer erfordert jedoch einerseits ein gewisses Geschick und konzentriertes Vorgehen; andererseits ist insbesondere im sogenannten stop- and- go- Verkehr, zum Beispiel in geschlossenen Ortschaften und in Verkehrsverdichtungen, das ständige Betätigen von Fahrpedal und Kupplung recht ermüdend.

Es wurden daher in der Vergangenheit schon selbsttätige Anfahreinrichtungen für Kraftfahrzeuge entwickelt. Diese lassen sich grob in zwei Gruppen einteilen:
- Anfahreinrichtungen, die ohne zusätzliche steuernde Mittel selbsttätig wirken, wie z. B. Fliehkraftkupplungen und hydrodynamische Drehmomentwandler und
- über Hilfsenergie fremdgesteuerte Anfahreinrichtungen, wie z. B. elektrohydraulisch betätigte Reibkupplungen oder Elektromagnetpulverkupplungen.

Während einerseits bei den Anfahreinrichtungen der ersten Gruppe das übertragene Drehmoment bzw. die übertragene Leistung in erster Linie vom Schlupf über der Anfahreinrichtung und/oder der Eingangsdrehzahl abhängig ist und die Wirkung dieser Einflußgrößen auf Drehmoment bzw. Leistung durch konstruktive Auslegung weitgehend festliegt, sind die Anfahreinrichtungen der zweiten Gruppe sowohl bezüglich der Einflußgrößen als auch deren Wirkung weitgehend flexibel.

Andererseits sind die Anfahreinrichtungen der ersten Gruppe bezüglich Verschleiß und Erwärmung relativ unproblematisch, wohingegen der allzu freien Gestaltung der Steuerung der Anfahreinrichtungen der zweiten Gruppe diesbezüglich Grenzen gesetzt sind; Überwachungseinrichtungen für Verschleiß und Erwärmung sind daher nahezu unumgänglich.

Um den Aufwand für Steuerungen von Anfahreinrichtungen der zweiten Gruppe so niedrig wie möglich zu halten, werden diese Steuerungen häufig so ausgelegt, daß sie in ihrem Verhalten eine Fliehkraftkupplung oder einen hydrodynamischen Drehmomentwandler nachbilden. Damit ist wiederum jedoch das Verhalten eines solchen Systems weitgehend festgelegt.

Beispielsweise ist aus der EP 0 276 022 A2 eine Steuereinrichtung für eine Fahrzeugkupplung bekannt. die zur Steuerung des Anfahrvorganges die Drehzahlen der treibenden und die Drehzahlen der getriebenen Teile der Kupplung ermittelt und abhängig hiervon den Kupplungseingriff so steuert, daß dieser einem vorgegebenen Kupplungseingriff nachfolgt.

Ausgehend von diesem Stand der Technik ist es Aufgabe der Erfindung, ein Verfahren zur selbsttätigen Steuerung einer drehzahlwandelnden Anfahreinrichtung für ein Kraftfahrzeug zu schaffen, das sich selbsttätig an das Fahrverhalten eines Fahrers des Kraftfahrzeugs bzw. eine gerade herrschende Verkehrssituation anpaßt und Anfahrvorgänge entsprechend situationsgerecht steuert.

Die Aufgabe wird erfindungsgemäß durch die kennzeichnenden Merkmale des Anspruchs 1 gelöst. Weitere, die Erfindung ausgestaltende Merkmale sind in den Unteransprüchen enthalten.

Die Vorteile der Erfindung sind in erster Linie darin zu sehen, daß ein Verfahren zur selbsttätigen Steuerung einer drehzahlwandelnden Anfahreinrichtung für ein Kraftfahrzeug geschaffen ist, das sich selbsttätig optimal an das Fahrverhalten eines Fahrers des Kraftfahrzeugs bzw. eine gerade herrschende Verkehrssituation anpaßt und entsprechend weitgehend selbsttätig ablaufende situationsgerechte Anfahrvorgänge ermöglicht.

Die Steuerung nach der Erfindung erlaubt es darüber hinaus, die Anfahreinrichtung nach relativ einfachen Funktionen zu steuern, wobei lediglich Parameter der Funktionen entsprechend einer aus wenigstens einer Betriebskenngröße des Kraftfahrzeugs ermittelten Fahraktivität variiert werden.

Dies wird in erster Linie dadurch erreicht, daß eine Kennlinie, nach der eine auf die Eingangsdrehzahl bezogene Drehzahldifferenz (sak(t)) zwischen der Eingangsdrehzahl und der Ausgangsdrehzahl der Anfahreinrichtung wenigstens bei einem Anfahrvorgang durch die Anfahreinrichtung mittelbar oder unmittelbar in Abhängigkeit von wenigstens der Eingangsdrehzahl (Motordrehzahl nmot(t)) eingestellt wird, entsprechend dem vor dem Anfahrvorgang oder vor dem Anhalten des Kraftfahrzeugs ermittelten Wert der Fahraktivität (SK(t)) aus einer Schar von mehreren Anfahrkennlinien (AFKi; i = 1, 2, ..., 5) ausgewählt wird.

Das Verfahren nach der Erfindung ist hierbei vorteilhaft sowohl auf Anfahreinrichtungen, die ohne zusätzliche steuernde Mittel selbsttätig wirken, wie z. B. Fliehkraftkupplungen und hydrodynamische Drehmomentwandler (sofern diese in ihrer Kennung bzw. in ihrer eingeprägten Kennlinie steuerbar sind) anwendbar als auch auf über Hilfsenergie fremdgesteuerte Anfahreinrichtungen, wie z. B. elektrohydraulisch betätigte Reibkupplungen oder Elektromagnetpulverkupplungen.

Die Erfindung wird nachstehend anhand der in den Zeichnungen dargestellten Ausführungsformen - ohne Beschränkung der Allgemeinheit - am Beispiel eines stufenlosen Getriebes erläutert.

Es zeigt:

Fig. 1    ein Blockschaltbild einer elektrischen Steuerung für ein stufenloses Getriebe eines Kraftfahrzeugs,

Fig. 2    eine Schar von mehreren Steuerkennlinien, die Werten des Drosselklappenwinkels bestimmte Werte von Motordrehzahl- Sollwerten zuweisen,

Fig. 3    eine motordrehzahlabhängige Grenzkennlinie, nach der die Unterscheidung zwischen Schubbetrieb und Zugbetrieb erfolgt,

Fig. 4    eine Schar von Anfahrkennlinien, die Werten der Motordrehzahl jeweils bestimmte Werte eines Kupplungs-Sollschlupfs zuweisen und

Fig. 5    eine Schar eingeprägter Kennlinien eines Drehmomentwandlers.

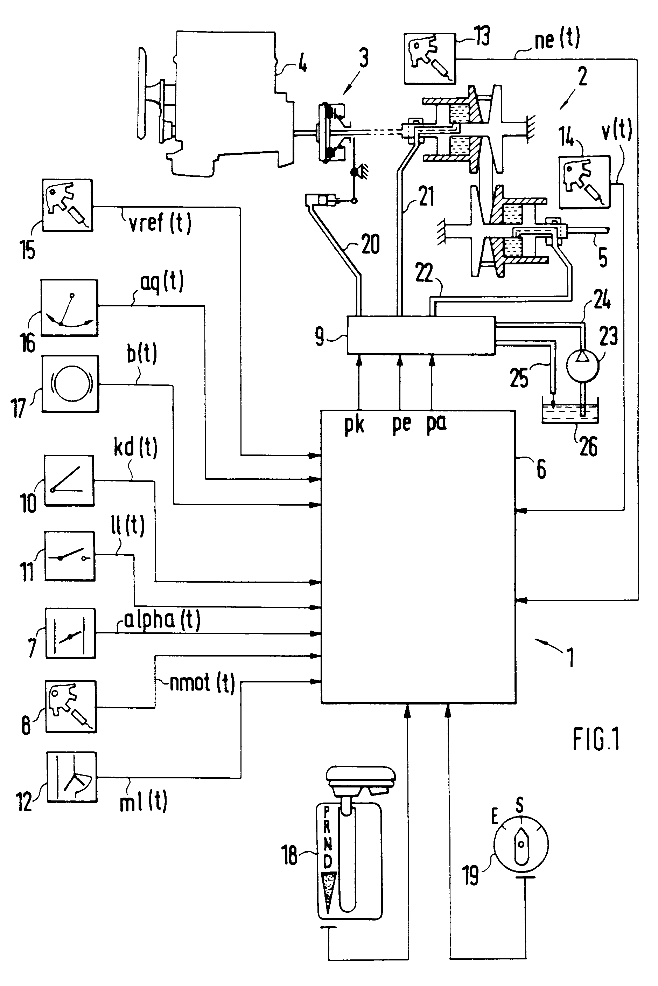

In **Fig. 1** ist mit 1 eine Steuerung eines elektrohydraulisch betätigten stufenlosen Getriebes 2 am Beispiel eines Umschlingungsgetriebes gezeigt. Das stufenlose Getriebe 2 wird über eine steuerbare Anfahrkupplung 3 von einer Brennkraftmaschine 4 angetrieben. Eine Abtriebswelle 5 des stufenlosen Getriebes 2 ist mit einem nicht gezeigten Radantrieb eines Kraftfahrzeugs verbunden.

Nachstehend sind Funktionen oder Variable, die sich mit der Zeit t ändern, als Funktionen f(t) der Zeit t bezeichnet.

Ein Steuergerät 6 steuert wenigstens in Abhängigkeit von der Drosselklappenstellung alpha(t) eines Drosselklappenwinkelgebers 7 und einer Motordrehzahl nmot(t) eines Motordrehzahlgebers 8 der Brennkraftmaschine 4 einen Hydraulik-Ventilblock 9 an. Zur Steuerung des stufenlosen Getriebes 2 und der Anfahrkupplung 3 erhält das Steuergerät 6 als weitere Eingangsgrößen beziehungsweise Meßgrößen ein Kick-down-Signal kd(t) eines Kick-down-Schalters 10, ein Leerlaufsignal 11(t) eines Leerlaufschalters 11, eine (der Brennkraftmaschine 4) zugeführte Luftmenge bzw. Luftmasse ml(t) eines Luftmengen- bzw. Luftmassengebers 12 sowie die Getriebeeingangsdrehzahl ne(t) eines Getriebeeingangsdrehzahlgebers 13 und eine Fahrgeschwindigkeit v(t) eines Fahrgeschwindigkeitgebers 14 des Kraftfahrzeugs (Getriebeausgangsdrehzahl).

Zusätzlich wird vom Steuergerät 6 eine Geschwindigkeit vref(t) eines Referenzgeschwindigkeitgebers 15 an einer nicht gezeigten Fahrzeugachse, einer Querbeschleunigung aq(t) eines Querbeschleunigungsgebers 16 und ein Bremssignal b(t) eines Bremssignalgebers 17 erfaßt und verarbeitet.

Schließlich ist die Steuerung üblicherweise vom Fahrzeugführer über einen Wählhebel 18 zur Vorwahl von Fahrstufen P (Parksperre) R (Rückwärtsgangstufe) N (Leergangstufe) D (selbsttätige Einstellung des Übersetzungsverhältnisses ue des stufenlosen Getriebes) beeinflußbar; ferner ist ein Einstellbereich des Wählhebels 18 zur direkten Vorgabe des Übersetzungsverhältnisses ue vorgesehen.

Bei üblichen Getriebesteuerungen wird schließlich über einen Programmwählschalter 19 die Steuerkennlinie, nach der das Steuergerät 1 in der Fahrstufe D das stufenlose Getriebe steuert, ausgewählt. Es sind hierbei in der Regel zwei Steuerkennlinien RKLj auswählbar, wobei in der Stellung E eine verbrauchsoptimierte Steuerkennlinie RKL1 und in der Stellung S eine leistungsoptimierte Steuerkennlinie RKL5 manuell einstellbar sind.

Alternativ zum Programmwählschalter 19 kann auch im Steuergerät 6 ein Steuerverfahren implementiert sein, das beispielsweise entsprechend der DE 33 41 652 C2 oder der DE 39 22 051 A1 den Fahrstil eines Fahrers oder dessen verkehrssituationsbedingtes Handeln in Bezug auf die Steuerung des Kraftfahrzeugs bewertet und eine Fahraktivität SK(t) (Fahrpedalaktivität) aus einer oder mehreren Betriebs- bzw. Fahrparametern ableitet. Auf der Basis dieser Fahraktivität SK(t) kann dann entsprechend einer Schaltstellung des Programmwählschalters 19 eine von mehreren Steuerkennlinien RKLj (j = 1, 2, ..., 5) zur Steuerung des stufenlosen Getriebes bzw. der Anfahrkupplung 3 herangezogen werden.

Ohne Beschränkung der Allgemeinheit kann das stufenlose Getriebe 2 anstatt über Steuerkennlinien auch über Steuerkennfelder in Abhängigkeit von mehreren, beliebigen Betriebs- oder Fahrparametern des Kraftfahrzeugs gesteuert werden.

In Abhängigkeit von den genannten Größen steuert das Steuergerät 6 über einen Signalausgang pk und den Ventilblock 9 den Hydraulikdruck in der Anfahrkupplung 3 sowie über die Signalausgänge pe und pa und den Hydraulikventilblock 9 das Übersetzungsverhältnis ue(t) zwischen der Getriebeeingangsdrehzahl ne(t) und der Getriebeausgangsdrehzahl (Fahrgeschwindigkeit) v(t) an.

Das Übersetzungsverhältnis ue(t) ist hierbei proportional zum Quotienten aus der Getriebeeingangsdrehzahl ne(t) und der Fahrgeschwindigkeit v(t): ue(t) = prop*(ne(t)/v(t)); prop entspricht einem Proportionalitätsfaktor. Eine zahlenmäßige Vergrößerung / Verkleinerung des Übersetzungsverhältnisses ue(t) bedeutet hierbei eine Übersetzung ins Kurze / Lange.

Der Hydraulikventilblock 9 verbindet hierzu die entsprechenden Steuerleitungen 20, 21 und 22 der Anfahrkupplung 3 und des stufenlosen Getriebes 2 mit einer an eine Pumpe 23 angeschlossenen Druckleitung 24 oder einer Rücklaufleitung 25 zu einem Vorratsbehälter 26 für Hydraulikflüssigkeit.

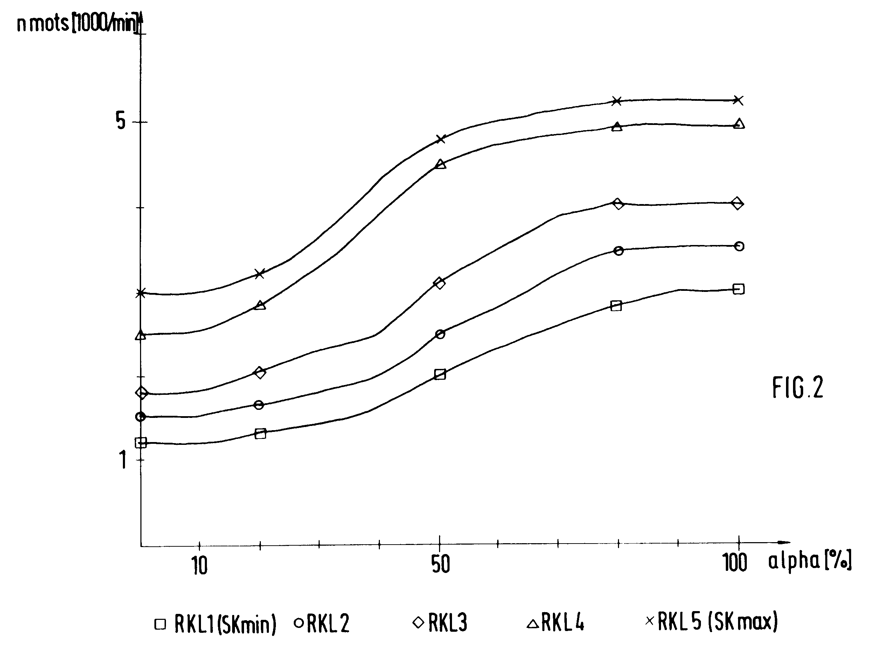

Die Übersetzung ue des Getriebes wird mittelbar über das Steuergerät 6 und den Ventilblock 9 über Steuerkennlinien RKLj wenigstens in Abhängigkeit von der Drosselklappenstellung alpha(t) und der Motordrehzahl nmot(t) selbsttätig eingestellt; die Steuerkennlinie RKLj wird entsprechend der den Fahrstil des Fahrers oder dessen verkehrssituationsbedingtes Handeln in Bezug auf die Steuerung des Kraftfahrzeugs bewertenden Fahraktivität SK(t) aus einer Schar von mehreren Steuerkennlinien RKLj (j = 1, 2, ..., 5) entsprechend **Fig. 2** ausgewählt.

Die in der **Fig. 2** gezeigten Steuerkennlinien decken hierbei den Bereich zwischen einer Steuerkennlinie RKL1, die einen verbrauchsoptimierten Betrieb des Fahrzeugs ermöglicht, und einer Steuerkennlinie RKL5, mit welcher das Kraftfahrzeug leistungsoptimiert betrieben werden kann, zumindest schrittweise ab (für wachsende Werte der Fahraktivität SK(t)).

Die Steuerung des stufenlosen Getriebes 2 stellt sich somit selbsttätig auf die Fahrweise des Fahrers ein, so daß ein manueller Eingriff bzw. eine Umstellung der Steuerkennlinien nicht vorgenommen werden muß. Der Programmwählschalter 19 entfällt daher.

Die Übersetzung ue des stufenlosen Getriebes 2 wird durch das Steuergerät 6 bevorzugt derart eingestellt, daß die Motordrehzahl nmot(t) einem Motordrehzahl-Sollwert nmots möglichst optimal nachgeführt wird. Hierzu kann im Steuergerät 6 ein unterlagerter Drehzahlregler implementiert sein. Die Übersetzung ue ist somit eine Funktion des Motordrehzahl-Sollwerts nmots, der Motordrehzahl nmot und der Zeit t: ue = f(nmots, nmot, t). Eine Abweichung Dnmot(t) = nmots(t)-nmot(t) der Motordrehzahl nmot(t) vom Motordrehzahl-Sollwert nmots(t) wird gegen 0 geführt.

Der augenblickliche Wert des Motordrehzahl-Sollwerts nmots wird hierbei über die augenblicklich angewählte Steuerkennlinie RKLj gemäß **Fig. 2** aus dem augenblicklichen Wert der Drosselklappenstellung alpha(t) und der Fahraktivität SK(t) ermittelt: nmots = RKLj(alpha, SK). Auch hierbei können wiederum die Steuerkennlinien RKLj zu Steuerkennfeldern ausgeweitet werden, um die Steuerung des Getriebes 2 von weiteren Parametern abhängig zu machen.

Wie der **Fig. 2** zu entnehmen ist, verlaufen die Steuerkennlinien RKLj im wesentlichen wie folgt: Die Steuerkennlinien RKLj weisen in einem unteren Wertebereich der Drosselklappenstellung alpha einen progressiven Verlauf auf, der in einem mittleren Bereich der Drosselklappenstellung alpha in einen degressiven Verlauf übergeht. Die Drosselklappenstellung alpha ist auf der horizontalen Achse in Prozent aufgetragen, wobei der Wert 0 % der geschlossenen Drosselklappe und der Wert 100 % der voll geöffneten Drosselklappe entspricht.

Es sind fünf Steuerkennlinien RKL1, RKL2, RKL3, RKL4 und RKL5 eingetragen, wobei die Steuerkennlinie RKL1 den verbrauchsoptimierten Betrieb des Kraftfahrzeugs ermöglicht und bei minimaler Fahraktivität SK(t) = SKmin angewählt wird. Die Steuerkennlinie RKL5 wird bei maximaler Fahraktivität SK(t) = SKmax ausgewählt, bei der der leistungsoptimierte Betrieb des Kraftfahrzeugs möglich ist. Die dazwischen liegenden Steuerkennlinien RKL2 bis RKL4 werden gestaffelt nach wachsenden Werten der Fahraktivität SK(t) zur Steuerung herangezogen.

Entsprechend der DE 33 41 652 C2 oder der DE 39 22 051 A1 wird die Fahraktivität SK(t) durch einen den Fahrstil des Fahrers oder dessen verkehrssituationsbedingtes Handeln längerfristig bewertenden funktionellen Zusammenhang aus zyklisch oder antizyklisch erfaßten aktuellen und vergangenen Werten einer einzigen Betriebskenngröße oder zu einer einzigen aus mehreren Betriebsgrößen eines Kraftfahrzeugs zusammengesetzten Größe ermittelt.

Hierbei werden beispielsweise Werte der Drosselklappenstellung alpha(t), der Fahrgeschwindigkeit v(t) und der Querbeschleunigung aq(t) im Sekunden- bzw. Millisekundenbereich erfaßt und daraus weitere Werte, wie z.B. die Drosselklappenänderungsgeschwindigkeit dalpha(t)/dt und die Beschleunigung des Fahrzeugs dv(t)/dt berechnet. Die ermittelten und berechneten Werte werden über Kennfelder mit weiteren Betriebsgrößen verknüpft und über einen funktionellen Zusammenhang zu einer Zwischengröße zusammengesetzt, aus der durch gleitende Mittelwertbildung, die sowohl die neu berechneten Werte als auch die vergangenen Werte längerfristig berücksichtigt, eine Fahraktivität SK(t) ermittelt.

Über einen weiteren funktionellen Zusammenhang wird diese Fahraktivität SK(t) schließlich, z.B. entsprechend der in der DE 39 22 051 A1 gezeigten Weise, eine Steuerkennlinie RKLj zugeordnet.

Es hat sich insbesondere im Zusammenhang mit stufenlosen Getrieben gezeigt, daß es sinnvoll sein kann, die Bewertung des Fahrstils des Fahrers oder dessen verkehrssituationsbedingten Handelns unter definierten Betriebszuständen des Kraftfahrzeugs zu unterbrechen.

Ein erster Betriebszustand tritt hierbei ein, wenn das Kraftfahrzeug bei laufender Brennkraftmaschine anhält. Dieser erste Betriebszustand kann beispielsweise definiert werden durch Fahrgeschwindigkeit $v(t) \approx 0$, und Motordrehzahl $nmot(t) > 0$ (Motordrehzahl $nmot(t)$ entspricht einer Leerlaufdrehzahl: $nmot(t) = nll$). Hierbei wird der augenblickliche Wert der Fahraktivität $SK(t)$ wenigstens für den Zeitraum, für den der jeweilige Betriebszustand eintritt, gespeichert und die Bewertung im Anschluß an diesen Zeitraum mit dem abgespeicherten Wert der Fahraktivität fortgesetzt. Hiermit wird erreicht, daß die Fahraktivität $SK(t)$ während längerer Haltezeiten des Kraftfahrzeugs bei laufendem Motor, z.B. bei einem Ampelstop, nicht auf den Minimalwert $SKmin$ absinkt.

Ein zweiter Betriebszustand tritt ein, sobald das Kraftfahrzeug abgestellt wird. Dieser Betriebszustand ist gekennzeichnet durch Fahrgeschwindigkeit $v(t) \approx 0$ und Motordrehzahl $nmot(t) \approx 0$ oder eine abgestellte Zündung des Kraftfahrzeugs bzw. der antreibenden (Brennkraft-) Maschine. Auch hier kann wiederum der augenblickliche Wert der Fahraktivität $SK(t)$ wenigstens für den Zeitraum, für den der jeweilige Betriebszustand eintritt, gespeichert und die Bewertung im Anschluß an diesen Zeitraum mit dem abgespeicherten Wert der Fahraktivität fortgesetzt werden.

Ergänzend kann in vorteilhafter Weise ein vom Fahrzeugführer manuell zu betätigender Tastschalter (beispielsweise im Bereich des Armaturenbretts des Kraftfahrzeugs) vorgesehen werden, mit dem die Fahraktivität $SK(t)$ auf einen Grundwert, zum Beispiel den Wert $SKmin$, zurückgesetzt werden kann.

Als Alternative zum zweiten Betriebszustand kann unter den dort gegebenen Bedingungen die Fahraktivität auch selbstständig auf den Grundwert $SKmin$ zurückgesetzt werden (dritter Betriebszustand).

Die Fahraktivität $SK(t)$ wird ohne Unterbrechung der Bewertung des Fahrstils des Fahrers oder dessen verkehrssituationsbedingten Handelns vorübergehend auf einen den leistungsoptimierten Betrieb des Kraftfahrzeugs ermöglichenden Wert $SKmax$ (Steuerkennlinie RKL5) gesetzt, wenn die zeitliche Änderung der Drosselklappenstellung $dalpha/dt$ einen ersten (positiven) Grenzwert $alphagl$ überschreitet und solange die Drosselklappenstellung $alpha(t)$ einen festgesetzten Wert $afg$ noch nicht unterschritten hat: $alpha(t) > afg$. Hiermit wird erreicht, daß der Fahrer bei plötzlicher erhöhter Leistungsanforderung selbst dann eine leistungsoptimierte Steuerfunktion erhält, wenn er den Kickdown-Schalter 10 nicht betätigt (schnelles Durchtreten des Fahrpedals, ohne den Anschlag zu erreichen und damit den Kick- down- Schalter 10 zu betätigen).

In weiterer Ausgestaltung der Erfindung wird die Übersetzung $ue$ des Getriebes festgehalten, wenn ein Zustand einer Übersetzungsfesthaltung $usf$ aktiv ist ($usf = 1$), wobei der Zustand der Übersetzungsfesthaltung in den aktiven Zustand übergeht, $usf = 1$, wenn die zeitliche Änderung $dalpha(t)/dt$ der Drosselklappenstellung $alpha(t)$ einen zweiten (negativen) Grenzwert $-alphag2$ unterschreitet und Schubbetrieb erkannt wird. Der Zustand der Übersetzungsfesthaltung $usf$ geht nach Ablauf eines ersten Zeitraumes $T1(SK(t))$ in den inaktiven Zustand über, $usf = 0$, wenn Zugbetrieb erkannt wird.

Alternativ dazu kann, solange der Zustand der Übersetzungsfesthaltung $usf$ aktiv ist, $usf = 1$, die Übersetzung $ue$ zumindest so lange mit einer ersten bestimmten endlichen und relativ langsamen Geschwindigkeit (erste zeitliche Änderung der Übersetzung $ck1 = due/dt = f(SK(t))$ bis zu demjenigen Wert der Übersetzung $ue$ verstellt (abgesenkt) werden, der im augenblicklichen Betriebspunkt des Kraftfahrzeugs ($alpha(t), v(t)$, $nmot(t)$, $t$) in der augenblicklich eingestellten Steuerkennlinie RKLj vorgesehen ist. Der Zustand der Übersetzungsfesthaltung geht hierbei in den aktiven Zustand über, $usf = 1$, wenn die zeitliche Änderung $dalpha/dt$ der Drosselklappenstellung $alpha(t)$ den zweiten (negativen) Grenzwert $-alphag2$ unterschreitet und Schubbetrieb erkannt wird. Der Zustand der Übersetzungsfesthaltung $usf$ geht nach Ablauf eines zweiten Zeitraums $T2(SK(t))$ in den inaktiven Zustand über, $usf = 0$, wenn Zugbetrieb erkannt wird.

Diese beiden Fälle berücksichtigen hierbei das Heranfahren an Kurven, bei dem sich gezeigt hat, daß ein Fahrer eines Kraftfahrzeugs hierbei in der Regel rascher vom Fahrpedal geht, als wenn er das Fahrzeug zum Stillstand bringen will oder ausrollen läßt. Die vor Eintreten der beiden Fälle eingestellte Übersetzung $ue$ wird, entgegen sonst üblicher Getriebesteuerungen, jeweils für den bestimmten Zeitraum $T1$ bzw. $T2$ festgehalten bzw. mit verminderter Geschwindigkeit abgesenkt.

Die Begriffe Schubbetrieb und Zugbetrieb sind hierbei folgendermaßen definiert:

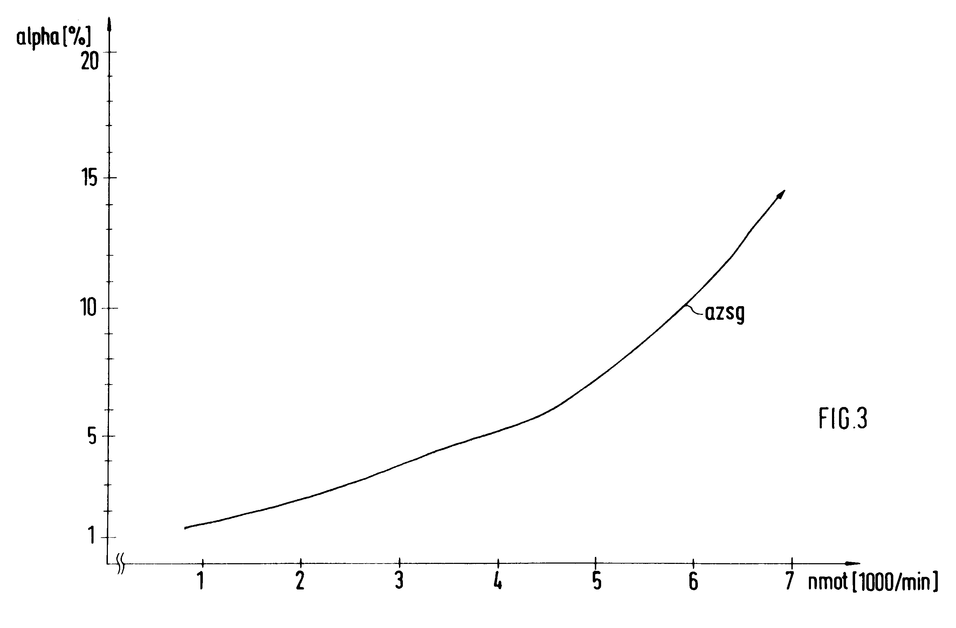

- Schubbetrieb wird erkannt, wenn die Drosselklappenstellung $alpha(t)$ unter einem motordrehzahlabhängige Grenzkennlinie $azsg(nmot)$ nach **Fig. 3** fällt: $alpha(t) < azsg(nmot)$.
- Zugbetrieb wird erkannt, wenn sowohl die Drosselklappenstellung $alpha(t)$ die motordrehzahlabhängige Grenzkennlinie $azsg(nmot)$ nach **Fig. 3** überschreitet ($alpha(t) > azsg(nmot)$), als auch die zeitliche Änderung der Fahrgeschwindigkeit $dv(t)/dt$ positive Werte annimmt:

$$alpha(t) > azsg(nmot) \cap dv(t)/dt > 0.$$

Nach Deaktivierung der Übersetzungsfesthaltung (usf = 1 -> usf = 0) im Schubbetrieb wird die Übersetzung ue(t) mit einer bestimmten Verstellgeschwindigkeit due/dt = FDUE(nmot, SK) vom Wert bei Übergang in den Schubbetrieb aus auf den zum Erreichen des vorgegebenen Motordrehzahl-Sollwerts nmots(t) nächstliegenden oder notwendigen Wert eingestellt. Dieser Motordrehzahl-Sollwert nmots(t) wird hierbei durch die augenblicklich angewählte Steuerkennlinie RKLj nach **Fig. 2** (bei geschlossener Drosselklappe alpha(t)≈0) vorgegeben: nmots = RKLj(alpha≈0, SK(t)).

Die Verstellgeschwindigkeit der Übersetzung due/dt wird hierbei bevorzugt über ein experimentell zu bestimmendes Kennfeld FDUE(nmot, SK) aus den momentanen oder bei Übergang in den Schubbetrieb ermittelten Werten von Motordrehzahl nmot(t) und Fahraktivität SK(t) ermittelt.

Alternativ dazu kann nach Deaktivierung der Übersetzungsfesthaltung (usf = 1 -> usf = 0) im Schubbetrieb die Übersetzung ue(t) derart eingestellt werden, daß die Motordrehzahl nmot(t) mit einer bestimmten Verstellgeschwindigkeit dnmot(t)/dt = FDNMOT(nmot, SK) vom Wert bei Übergang in den Schubbetrieb aus auf den Motordrehzahl-Sollwert nmots(t) = RKLj(alpha≈0, SK(t)) abgesenkt wird. Die Verstellgeschwindigkeit der Motordrehzahl dnmot/dt wird auch hier wieder über ein experimentell zu ermittelndes Kennfeld FDNMOT(nmot, SK) aus den momentanen oder bei Übergang in den Schubbetrieb ermittelten Werten von Motordrehzahl nmot(t) und Fahraktivität SK(t) bestimmt.

Die Verstellgeschwindigkeit der Motordrehzahl dnmot(t)/dt kann hierbei konstant gehalten werden, sofern die Motordrehzahl nmot(t) den von der momentanen oder bei Übergang in den Schubbetrieb ermittelten Steuerkennlinie vorgegebenen Wert des Motordrehzahl-Sollwerts nmots erreicht und die Motordrehzahl einen Grenzwert nmotg(SK(t)) noch nicht unterschritten hat:

$$nmot(t) > nmotg(SK(t)).$$

Der Grenzwert nmotg(SK(t)) kann hierbei wiederum von der Fahraktivität abhängen und mit wachsender Fahraktivität größer werden. Nach Unterschreiten des Grenzwerts nmot(t) wird die augenblicklich eingestellte Übersetzung ue(t) festgehalten, bis die Motordrehzahl nmot(t) die Leerlaufdrehzahl nmotll der Brennkraftmaschine erreicht hat. Schließlich wird bei Erreichen der Leerlaufdrehzahl nmotll die Anfahrkupplung 3 geöffnet.

Durch die hier beschriebene Steuerung des Übersetzungsverhältnisses bzw. der Motordrehzahl wird erreicht, daß sich die Bremswirkung der Brennkraftmaschine im Schubbetrieb und nicht aktiver Übersetzungsfesthaltung usf = 0 verstärkt auf die Verzögerung des Kraftfahrzeugs auswirkt.

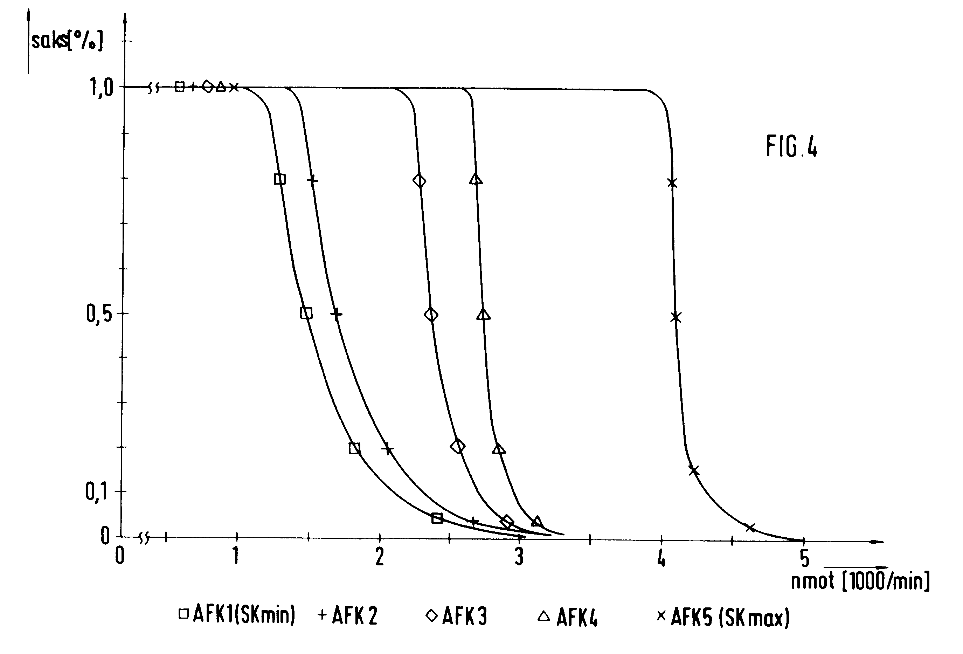

Erfindungsgemäß wird eine Anfahrkennlinie AFK(SK(t)), nach der eine dem stufenlosen Getriebe 2 vorgeschaltete Anfahrkupplung 3 in Abhängigkeit von wenigstens der Motordrehzahl nmot(t) bei einem Anfahrvorgang gesteuert wird, entsprechend dem vor dem Anfahrvorgang oder vor dem Anhalten des Kraftfahrzeuges ermittelten Wert der Fahraktivität SK(t) aus einer Schar von mehreren Anfahrkennlinien AFKi (i = 1, 2, ..., 5), siehe **Fig. 4**, ausgewählt: AFK1 für SKmin, AFK2 bis AFK4 gestaffelt nach wachsenden Werten der Fahraktivität SK(t) und AFK5 für SKmax.

Hiermit ist es möglich, einen Faßpunkt, bei dem die Differenzdrehzahl Dk(t) = nmot(t)-ne(t) zwischen der Motordrehzahl nmot(t) und der Getriebeeingangsdrehzahl ne(t) zu Null wird, entsprechend der Fahraktivität SK(t) einzustellen. Bei höheren Werten der Fahraktivität wird der Faßpunkt zu höheren Motordrehzahlen hin und damit bei Brennkraftmaschinen zu höheren Werten des Motordrehmoments bzw. der Motorleistung hin verschoben.

Der Druck auf die Reibglieder der Anfahrkupplung 3 wird hierbei derart eingestellt, daß die auf die Motordrehzahl nmot(t) bezogene Drehzahldifferenz (Kupplungsschlupf) sak(t) = Dk(t)/nmot(t) = -(nmot(t)-ne(t))/nmot(t) zwischen der Motordrehzahl nmot(t) und der Getriebeeingangsdrehzahl ne(t) über die Anfahrkennlinie AFK(SK(t)) nach **Fig. 4** einem augenblicklichen Wert der Motordrehzahl nmot zugewiesenen Kupplungssollschlupf saks(t) nachgeführt wird; dies kann beispielsweise mittels eines unterlagerten Regelkreises erfolgen.

Die Anfahrkennlinien AFK(SK(t)) weisen wachsenden Werten der Motordrehzahl nmot fallende Werte des Kupplungssollschlupfs zu. Mit wachsenden Werten der Fahraktivität SK(t) werden die Anfahrkennlinien AFK(SK(t)) zu höheren Werten der Motordrehzahl nmot hin verschoben.

In vorteilhafter Weise wird die Anfahrkupplung geöffnet, wenn im Schubbetrieb ein Betrag einer Differenzgeschwindigkeit | Dv(t)| = |vref(t)-v(t)| zwischen einer Geschwindigkeit vref(t) einer nicht angetriebenen Achse und der an einer angetriebenen Achse erfaßten Fahrgeschwindigkeit v(t) einen zulässigen Differenzgeschwindigkeitswert Dvzul(SK(t)) überschreitet:
|Dv(t)|<|Dvzul(SK(t))|. Mit dieser Maßnahme kann somit übermäßiger Bremsschlupf reduziert werden.

Sofern das Kraftfahrzeug anstatt mit einer Anfahrkupplung 3 mit einem steuerbaren Drehmomentwandler als dem Getriebe 2 vorgeschalteter drehzahlwandelnder Anfahreinrichtung ausgestattet ist, wird dessen eingeprägte Kennlinie WSK(SK(t)) (Kupplungs- beziehungsweise Wandlerschlupf sak über der Motordrehzahl nmot) entsprechend dem vor dem Anfahrvorgang oder vor dem Anhalten des Kraftfahrzeuges ermittelten Wert der Fahraktivität SK(t) ausgewählt und zumindest beim Anfahrvorgang mit wachsender Fahraktivität SK(t) weicher eingestellt.

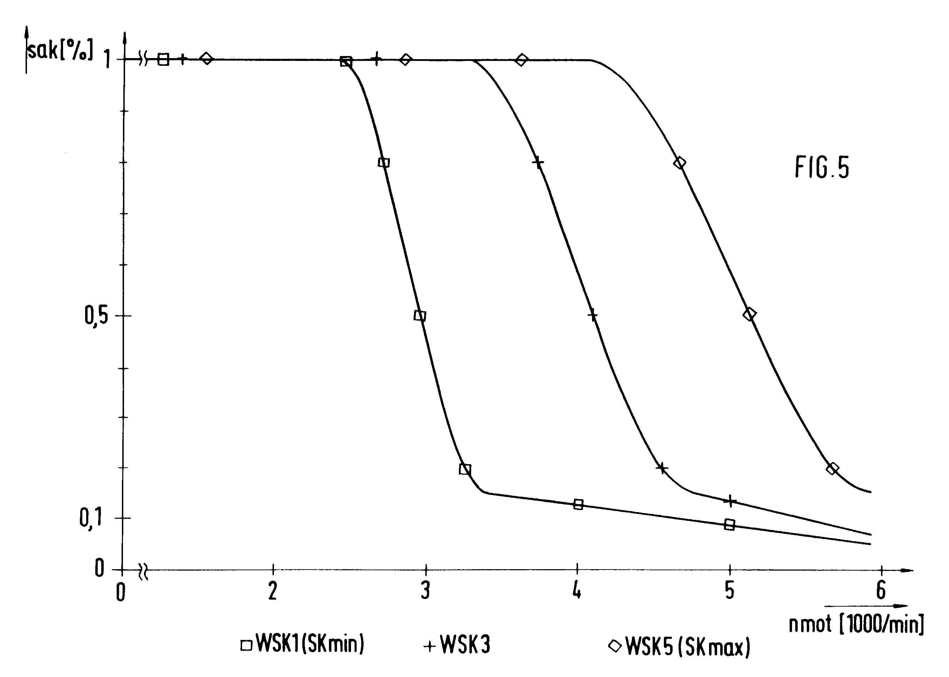

Die weichere Einstellung der Kennlinie WSK-(SK(t)) ermöglicht hierbei höhere Drehzahlen der Antriebs-Brennkraftmaschine und somit höhere Werte des zum Anfahren eingesetzten Drehmoments bzw. der eingesetzten Leistung. Entsprechende Wandlerkennlinien WSK1(SK = SKmin), WSK3(SK) und WSK5(SK = SKmax) sind in **Fig. 5** dargestellt.

In vorteilhafter Weise kann ein Wert der Übersetzung ue(t) bei einem Anfahrvorgang entsprechend dem vor dem Anfahrvorgang oder vor dem Anhalten des Kraftfahrzeugs ermittelten Wert der Fahraktivität SK(t) eingestellt werden. Mit wachsender Fahraktivität SK(t) wird der Wert der Übersetzung beim Anfahrvorgang vergrößert.

Ist der Drehmomentwandler mit einer schaltbaren Wandlerüberbrückungskupplung zum Überbrücken des Drehmomentwandlers ausgestattet, so können Schaltgrenzen, bei denen die Wandlerüberbrückungskupplung geöffnet (nmot(t)<wuko(SK(t)) oder geschlossen (nmot(t)>wuks(SK(t)) wird, wenigstens von der Fahraktivität SK(t) abhängen. Mit wachsender, mehr leistungsorientierter Fahraktivität werden die Schaltgrenzen zu niedrigeren Werten hin verschoben.

Schließlich kann entstehender Antriebs- oder Bremsschlupf in vorteilhafter Weise vermieden werden, indem die augenblicklich eingestellte Übersetzung ue des Getriebes verkleinert wird, sofern der Betrag der Differenzgeschwindigkeit zwischen der Geschwindigkeit vref einer nicht angetriebenen Achse und der an einer angetriebenen Achse erfaßten Fahrgeschwindigkeit v(t) den zulässigen Differenzgeschwindigkeitswert Dvzul(SK(t)) überschreitet. Beim Überschreiten des zulässigen Differenzgeschwindigkeitswerts Dvzul(SK(t)) kann

- eine Wandlerüberbrückungskupplung eines mit einem Drehmomentwandler ausgestatteten Getriebes geöffnet,
- eine Haltezeit Th(SK(t)) gesetzt werden, während der eine Verkleinerung der Übersetzung nicht unterbunden werden kann und
- eine Vergrößerung der Übersetzung verhindert werden, wobei diese Funktionen wieder zurückgesetzt werden, wenn sowohl Zugbetrieb erkannt wird als auch positive Werte der Änderung der Fahrtgeschwindigkeit v(t) vorliegen als auch der Betrag der Differenzgeschwindigkeit Dv(t) kleiner als der zulässige Differenzgeschwindigkeitswert Dvzul(SK(t)) ist.

Die Zeiträume T1(SK(t)), T2(SK(t)), die Haltezeit Th(SK(t)) und der zulässige Differenzgeschwindigkeitswert Dvzul(SK(t)) können von der Fahraktivität SK(t) abhängen. Die Zeiträume T1(SK(t)) und T2(SK(t)) werden mit wachsender Fahraktivität SK-(t) größer, während die Haltezeit Th(SK(t)) und der zulässige Differenzgeschwindigkeitswert Dvzul(SK-(t)) mit wachsender Fahraktivität SK(t) kleiner werden. Die Zeiträume und die Haltezeit variieren bevorzugt in einem Bereich von 1 bis 3 sec.

**Patentansprüche**

1. Verfahren zur Steuerung einer drehzahlwandelnden Anfahreinrichtung (3) eines mit einer Brennkraftmaschine (4) angetriebenen Kraftfahrzeugs, dessen Brennkraftmaschine (4) mittels eines Leistungssteuerorgans, vorzugsweise eines Fahrpedals oder einer Drosselklappe, beeinflußbar ist, wobei die auf die Eingangsdrehzahl (Motordrehzahl nmot(t)) der Anfahreinrichtung (3) bezogene Drehzahldifferenz (sak(t)) zwischen der Eingangsdrehzahl (Motordrehzahl nmot(t)) der Anfahreinrichtung (3) und deren Ausgangsdrehzahl (Getriebeeingangsdrehzahl ne(t)) steuerbar ist, **dadurch gekennzeichnet**, daß eine Kennlinie, nach der die bezogene Drehzahldifferenz (sak(t)) wenigstens bei einem Anfahrvorgang durch die Anfahreinrichtung mittelbar oder unmittelbar in Abhängigkeit von wenigstens der Motordrehzahl (nmot(t)) engestellt wird, entsprechend einem vor dem Anfahrvorgang oder vor dem Anhatten des Kraftfahrzeugs ermittelten Wert einer Fahraktivität (SK(t)), die den Fahrstil des Fahrers oder dessen verkehrssituationsbedingtes Handeln längerfristig bewertet, aus einer Schar von mehreren Anfahrkennlinien (AFKi; i = 1, 2, ..., 5) ausgewählt wird.

2. Verfahren nach Anspruch 1, **dadurch gekennzeichnet**, daß die Fahraktivität (SK(t)) durch einen funktionellen Zusammenhang (gleitende Mittelwertbildung) aus zyklisch oder antizyklisch erfaßten aktuellen und vergangenen Werten einer einzigen Betriebskenngröße oder einer zu einer einzigen aus mehreren Betriebskenngrößen eines Kraftfahrzeugs zusammengesetzten Größe ermittelt wird.

3. Verfahren nach Anspruch 1 oder 2, **dadurch gekennzeichnet**, daß ein erster Betriebszustand eintritt, wenn das Kraftfahrzeug anhält (Fahrgeschwindigkeit v(t)≈0) und die Brennkraftmaschine läuft (nmot>0), wobei bei Eintreten des ersten Betriebszustands der augenblickliche Wert der Fahraktivität (SK(t)) wenigstens für den Zeitraum, für den der erste Betriebszustand eintritt, gespeichert wird und die Bewertung im Anschluß an diesen Zeitraum mit dem abgespeicherten Wert der Fahraktivität beginnend fortgesetzt wird.

4. Verfahren nach Anspruch 1, 2 oder 3, **dadurch gekennzeichnet**, daß ein zweiter Betriebszustand eintritt, wenn das Kraftfahrzeug abgestellt wird (Zündung aus oder sowohl Fahrgeschwindigkeit $v(t) \approx 0$ als auch $nmot(t) \approx 0$), wobei bei Eintreten des zweiten Betriebszustands der augenblickliche Wert der Fahraktivität (SK(t)) wenigstens für den Zeitraum, für den der zweite Betriebszustand eintritt, gespeichert wird und die Bewertung im Anschluß an diesen Zeitraum mit dem abgespeicherten Wert der Fahraktivität beginnend fortgesetzt wird.

5. Verfahren nach wenigstens einem der vorangehenden Ansprüche, **dadurch gekennzeichnet**, daß die Fahraktivität (SK(t)) durch einen manuell zu betätigenden Tastschalter auf einen Grundwert (Minimalwert SKmin) zurückgesetzt werden kann.

6. Verfahren nach wenigstens einem der vorangehenden Ansprüche 1 bis 3 oder 6, **dadurch gekennzeichnet**, daß ein dritter Betriebszustand eintritt, wenn das Kraftfahrzeug abgestellt wird (Zündung aus oder Fahrgeschwindigkeit $v(t) \approx 0$ und $nmot(t) \approx 0$), wobei bei Eintreten des dritten Betriebszustands der augenblickliche Wert der Fahraktivität (SK(t)) selbsttätig auf den Grundwert (Minimalwert SKmin) zurückgesetzt wird.

7. Verfahren nach wenigstens einem der vorangehenden Ansprüche, **dadurch gekennzeichnet**, daß eine Anfahrkennlinie (AFK(SK(t))), nach der eine dem stufenlosen Getriebe vorgeschaltete Anfahrkupplung (3) in Abhängigkeit von wenigstens der Motordrehzahl (nmot(t)) bei einem Anfahrvorgang gesteuert wird, entsprechend dem vor dem Anfahrvorgang oder vor dem Anhalten des Kraftfahrzeugs ermittelten Wert der Fahraktivität (SK(t)) aus einer Schar von mehreren Anfahrkennlinien (AFKi; i = 1, 2, ..., 5) ausgewählt wird.

8. Verfahren nach Anspruch 7, **dadurch gekennzeichnet**, daß der Druck auf die Reibglieder dar Anfahrkupplung (3) derart eingestellt wird, daß die auf die Motordrehzahl (nmot(t)) bezogene Drehzahldifferenz ($sak(t) = dk(t)/nmot(t) = -(nmot(t)-ne(t))/nmot(t)$) zwischen der Motordrehzahl (nmot(t)) und der Getriebeeingangsdrehzahl (ne(t)) einem über die Anfahrkennlinie (AFK(SK(t))) einem augenblicklichen Wert der Motordrehzahl (nmot(t)) zugewiesenen Kupplungssollschlupf (saks(t)) nachgeführt wird.

9. Verfahren nach Anspruch 8, **dadurch gekennzeichnet**, daß die Anfahrkennlinie (AFK(SK(t))) wachsenden Werten der Motordrehzahl (nmot) fallende Werte des Kupplungssollschlupfs (saks) zuweisen.

10. Verfahren nach Anspruch 8 oder 9, **dadurch gekennzeichnet**, daß mit wachsenden Werten der Fahraktivität (SK(t)) die Anfahrkennlinien (AFK(SK(t))) zu höheren Werten der Motordrehzahl (nmot) hin verschoben werden.

11. Verfahren nach wenigstens einem der Ansprüchen 7 bis 10, **dadurch gekennzeichnet**, daß die Anfahrkupplung (3) geöffnet wird, wenn im Schubbetrieb ein Betrag einer Differenzgeschwindigkeit ($|Dv(t)| = |vref(t)-v(t)|$) zwischen einer Geschwindigkeit (vref(t)) einer nicht angetriebenen Achse und der an einer angetriebenen Achse erfaßten Fahrgeschwindigkeit (v(t)) einen zulässigen Differenzgeschwindigkeitswert (Dvzul(SK(t))) überschreitet ($|Dv(t)| > Dvzul(SK(t))$).

12. Verfahren nach wenigstens einem der vorangehenden Ansprüche 1 bis 6, **dadurch gekennzeichnet**, daß eine eingeprägte Kennlinie eines dem stufenlosen Getriebe vorgeschalteten steuerbaren Drehmomentwandlers entsprechend dem vor dem Anfahrvorgang oder vor dem Anhalten des Kraftfahrzeugs ermittelten Wert der Fahraktivität (SK(t)) ausgewählt und zumindest beim Anfahrvorgang mit wachsender Fahraktivität (SK(t)) weicher eingestellt wird.

13. Verfahren nach Anspruch 12, **dadurch gekennzeichnet**, daß eine den Drehmomentwandler überbrückende Wandlerüberbrückungskupplung geöffnet wird, wenn der Betrag der Differenzgeschwindigkeit ($|Dv(t)| = |vref(t)-v(t)|$) zwischen der Geschwindigkeit (vref(t)) einer nicht angetriebenen Achse und der an einer angetriebenen Achse erfaßten Fahrgeschwindigkeit (v(t)) den zulässigen Differenzgeschwindigkeitswert (Dvzul (SK(t))) überschreitet ($|Dv(t)| > Dvzul(SK(t))$).

14. Verfahren nach wenigstens einem der vorangehenden Ansprüche, dadurch gekennzeichnet, daß bei Überschreiten des zulässigen Differenzgeschwindigkeitswerts (Dvzul(SK(t)))
   - die Wandlerüberbrückungskupplung eines mit einem Drehmomentwandler ausgestatteten Getriebes geöffnet,
   - eine Haltezeit (Th(SK(t))) gesetzt wird, während der eine Verkleinerung der Übersetzung nicht unterbunden werden kann und

- eine Vergrößerung der Übersetzung verhindert wird,

wobei diese Funktionen wieder zurückgesetzt werden, wenn sowohl Zugbetrieb erkannt wird, als auch positive Werte der Änderung der Fahrgeschwindigkeit (v(t)) vorliegen, als auch der Betrag der Differenzgeschwindigkeit (|Dv-(t)|) kleiner als der zulässige Differenzgeschwindigkeitswert (Dvzul(SK(t))) ist (|Dv(t)-|<Dvzul(SK(t))).

15. Verfahren nach wenigstens einem der vorangehenden Ansprüche, **dadurch gekennzeichnet**, daß die Zeiträume (T1(SK(t))), (T2(SK(t))), die Haltezeit (Th(SK(t))) und der zulässige Differenzgeschwindigkeitswert (Dvzul(SK(t))) von der Fahraktivität (SK(t)) abhängen, wobei die Zeiträume (T1(SK(t)) und T2(SK(t))) mit wachsender Fahraktivität (SK(t)) größer und die Haltezeit (Th(SK(t))) und der zulässige Differenzgeschwindigkeitswert (Dvzul(SK(t))) mit wachsender Fahraktivität SK(t) kleiner werden.

## Claims

1. A method of controlling a variable-speed starting device (3) or a motor vehicle driven by an internal combustion engine (4), which internal combustion engine (4) can be controlled by a power control mechanism, preferably an accelerator pedal or a throttle valve, the difference in speed (sak(t)), relative to the input speed (engine speed nmot(t)) of the starting device (3), between the input speed (engine speed nmot(t)) of the starting device (3) and the output speed thereof (gear input speed ne(t)) being controllable, **characterised in that** a characteristic curve, according to which, during at least one start-up process, the relative difference in speed (sak(t)) is regulated by the starting device indirectly or directly in dependence on at least the engine speed (nmot(t)), is selected from a system comprising a plurality of characteristic start-up curves (AFKi; i = 1, 2, ..., 5) in conformity with a value, established prior to the start-up process or prior to the vehicle stopping, for a driving activity (SK(t)) which makes a relatively long-term assessment of the driver's style of driving or of his actions in particular traffic situations.

2. A method as claimed in Claim 1, **characterised in that** the driving activity (Sk(t)) is established by means of a functional relationship (formation of a sliding average) from cyclically or anticyclically determined current and past values of a single operating parameter or of a quantity which has been combined to form a single operating parameter from a plurality of operating parameters of a motor vehicle.

3. A method as claimed in Claim 1 or Claim 2, **characterised in that** a first operating state occurs when the vehicle stops (driving speed v(t)≈0) and the internal combustion engine Is running (nmot>0), on commencement of the first operating state the current driving activity value (SK(t)) being stored at least for the period for which the first operating state occurs and the assessment being continued immediately following this period, starting with the stored driving activity value.

4. A method as claimed in Claim 1, 2 or 3, **characterised in that** a second operating state occurs when the vehicle is switched off (ignition off or both driving speed v(t)≈0 and nmot(t)≈0), on commencement of the second operating state the current driving activity value (SK(t)) being stored at least for the period for which the second operating state occurs and the assessment being continued immediately following this period, starting with the stored driving activity value.

5. A method as claimed in at least one of the preceding claims, **characterised in that** the driving activity (SK(t)) can be put back to a base value (minimum value SKmin) by a manually operated touch contact.

6. A method as claimed in at least one of the preceding Claims 1 to 3 or 6, **characterised in that** a third operating state occurs when the vehicle is switched off (ignition off or both driving speed v(t)≈0 and nmot(t)≈0), on commencement of the third operating state the current driving activity value (SK(t)) being automatically put back to the base value (minimum value SKmin).

7. A method as claimed in at least one of the preceding claims, **characterised in that** a characteristic curve (AFK(SK(t))), according to which a start-up coupling (3) upstream at the infinitely variable gear is controlled during one start-up process in dependence on at least the engine speed (nmot(t)), is selected from a system comprising a plurality of characteristic start-up curves (AFKi; i = 1, 2, ..., 5) in conformity with the driving activity value (SK(t)) established prior to the start-up process or prior to the vehicle stopping.

8. A method as claimed in, Claim 7, **characterised in that** the pressure on the friction members of the start-up coupling (3) is regulated in such a way that the difference in speed, relative to the engine speed (nmot(t)), between the engine speed (nmot(t)) and the gear input speed (ne(t)), that is to say sak(t)-=dk(t)/nmot(t)=(nmot(t)-ne(t))/nmot(t), follows a theoretical slip in the coupling (saks(t)) assigned to a current value for the engine speed (nmot(t)) via the characteristic start-up curve (AFK(SK(t))).

9. A method as claimed in Claim 8, **characterised in that** the characteristic start-up curve (AFK(SK(t))) assigns falling values for the theoretical slip in the coupling (saks) to rising values for the engine speed (nmot).

10. A method as claimed in Claim 8 or Claim 9, **characterised in that** with rising values for the driving activity (SK(t)) the characteristic start-up curves (AFK(SK(t))) are displaced to higher values for the engine speed (nmot).

11. A method as claimed in at least one of Claims 7 to 10, **characterised in that** the start-up coupling (3) is opened when, in push mode, a value for a differential speed (|Dv(t)|=|vref(t)-v-(t)|) between a speed (vref(t)) of a non-driven wheel shaft and the driving speed (v(t)) recorded on a driven wheel shaft exceeds an admissible differential speed value (Dvzul(SK-(t))), that is to say, |Dv(t)|>Dvzul(SK(t)).

12. A method as claimed in at least one of the preceding Claims 1 to 6, **characterised in that** an impressed characteristic curve of a controllable torque converter upstream of the infinitely variable gear is selected in conformity with the driving activity value (SK(t)) established prior to the start-up process or prior to the vehicle stopping and, at least during the start-up process, is given a weaker setting with increasing driving activity (Sk(t)).

13. A method as claimed in claim 12, **characterised in that** a converter-bridging coupling bridging the torque converter is opened when the value for the differential speed (|Dv(t)-|=|vref(t)-v(t)|) between the speed (vref(t)) of a non-driven wheel shaft and the driving speed (v(t)) recorded an a driven wheel shaft exceeds the admissible differential speed value (Dvzul-(SK(t))), that is to say, |Dv(t)|>Dvzul(SK(t)).

14. A method as claimed in at least one of the preceding claims, **characterised in that** when the admissible differential speed value (Dvzul-(SK(t))) is exceeded,

- the converter-bridging coupling of a gear fitted with a torque converter is opened,
- a pause (Th(SK(t))) is set, during which a reduction in the gear ratio cannot be halted and
- an increase in the gear ratio is prevented,

these functions being put back again when both pull mode is acknowledged, and there are positive values for the alteration in driving speed (v(t)), and the value for the differential speed (|Dv(t)|) is smaller than the admissible differential speed value (Dvzul(SK(t))), that is to say, |Dv(t)|<Dvzul(SK(t)).

15. A method as claimed in at least one of the preceding claims, **characterised in that** the time periods (T1(SK(t))), (T2(SK(t))), the pause (Th(SK(t))) and the admissible differential speed value (Dvzul(SK(t))) are dependent on the driving activity (SK(t)), the time periods (T1(SK(t))) and (T2(SK(t))) increasing as the driving activity (SK(t)) increases and the pause (Th(SK(t))) and the admissible differential speed value (Dvzul(SK(t))) decreasing as the driving activity SK(t) increases.

**Revendications**

1. Procédé de commande d'un dispositif de démarrage (3) faisant varier la vitesse de rotation pour véhicule propulsé au moyen d'un moteur à combustion interne (4), dont le moteur (4) peut être influencé au moyen d'un organe de commande de puissance de préférence une pédale d'accélérateur ou un papillon d'étranglement, la différence de vitesse (sak(t)) rapportée à la vitesse d'entrée (vitesse de rotation du moteur nmot(t)) du dispositif de démarrage (3), pouvant être commandée entre la vitesse d'entrée (vitesse de rotation du moteur nmot(t)) du dispositif de démarrage (3) et sa vitesse de sortie (vitesse d'entrée de la boîte ne(t)), caractérisé en ce qu'une courbe caractéristique, suivant laquelle la différence de vitesse (sak(t)) rapportée est réglée au moins pour processus de démarrage par le dispositif de démarrage, indirectement ou directement en fonction d'au moins la vitesse de rotation du moteur (nmot-(t)), suivant une valeur, déterminée avant le démarrage ou avant l'arrêt du véhicule, d'une activité de conduite SK(t)), qui évalue à long terme le style de conduite du conducteur ou son comportement dû aux conditions de circulation, est sélectionnée parmi un ensemble de plusieurs courbes caractéristiques de démarrage (AFKi ; i = 1, 2, ...5).

2. Procédé selon la revendication 1, caractérisé en ce que l'activité de conduite (SK(t)) est déterminée par une relation fonctionnelle (formation d'une valeur moyenne glissante) à partir de valeurs actuelles et passées, détectées cycliquement ou non d'une seule grandeur caractéristique de fonctionnement ou d'une grandeur unique constituée de plusieurs grandeurs caractéristiques de fonctionnement d'un véhicule.

3. Procédé selon la revendication 1 ou 2, caractérisé en ce qu'un premier état de fonctionnement intervient lorsque le véhicule s'arrête (vitesse de marche v(t) ≈ 0) et le moteur à combustion tourne (nmot > 0), à l'intervention de premier état de fonctionnement la valeur instantanée de l'activité de conduite (SK(t)) étant mémorisée au moins pour l'intervalle de temps pendant lequel intervient le premier état de fonctionnement, et l'évaluation étant poursuivie à la suite de cet intervalle de temps en commençant par la valeur mémorisée de l'activité de conduite.

4. Procédé selon les revendications 1, 2 ou 3, caractérisé en ce qu'un deuxième état de fonctionnement intervient lorsque le moteur du véhicule est coupé (coupure de l'allumage ou vitesse de marche v(t) ≈ 0 ou en encore nmot(t) ≈ 0), à l'intervention du deuxième état de fonctionnement la valeur instantanée de l'activité de conduite (SK(t)) étant mémorisée au moins pendant l'intervalle de temps pendant lequel intervient le deuxième état de fonctionnement et l'évaluation étant poursuivie à la suite de cet intervalle de temps, en commençant par la valeur mémorisée de l'activité de conduite.

5. Procédé selon l'une au moins des revendications précédentes, caractérisé en ce que l'activité de conduite (SK(t)) peut être replacée sur une valeur de base (valeur minimale SKmin) par un interrupteur à touches à actionnement manuel.

6. Procédé selon l'une au moins des revendications 1 à 3 ou 5 précédentes, caractérisé en ce qu'un troisième état de fonctionnement intervient lorsque le moteur du véhicule est coupé (coupure de l'allumage ou vitesse de marche v(t) ≈ 0 et nmot(t) ≈ 0), à l'intervention du troisième état de fonctionnement la valeur instantanée de l'activité de conduite (SK(t)) étant automatiquement replacée sur la valeur de base (valeur minimale SKmin).

7. Procédé selon l'une au moins des revendications précédentes, caractérisé en ce qu'une courbe caractéristique de démarrage (AFK(t))), selon laquelle un accouplement de démarrage (3), monté en amont de la boîte de vitesses à variation continue, est commandé en fonction d'au moins la vitesse de rotation du moteur (nmot(t)) lors 'un démarrage, est sélectionnée suivant la valeur de l'activité de conduite (SK(t)), déterminée avant le démarrage ou avant l'arrêt du véhicule, à partir d'un ensemble de plusieurs courbes caractéristiques de démarrage (AFKi ; i = 1, 2, ..., 5).

8. Procédé selon la revendication 7, caractérisé en ce que la pression exercée sur les organes de friction de l'accouplement de démarrage (3) est réglée de manière que la différence de vitesse rapportée à la vitesse de rotation du moteur (nmot(t)), (sak(t) = dk(t)/nmot(t) = (nmot(t)-ne(t))/nmot(t)) entre la vitesse de rotation du moteur (nmot(t)) et la vitesse d'entrée de la boîte (ne(t)), est introduite après un glissement de consigne de l'accouplment (saks(t)), affecté, sur la courbe caractéristique de démarrage (AFK(SK(t))), à une valeur instantanée de la vitesse de rotation du moteur (nmot(t)).

9. Procédé selon la revendication 8, caractérisé en ce que la courbe caractéristique de démarrage (AFK(t))) affecte à des valeurs croissantes de la vitesse de rotation du moteur (nmot) des valeurs décroissantes du glissement de consigne de l'accouplement (saks).

10. Procédé selon la revendication 8 ou 9, caractérisé en ce qu'avec des valeurs croissantes de l'activité de conduite (SK(t)) les courbes caractéristiques de démarrage (AFK(SK(t))) sont déplacées vers des valeurs supérieures de la vitesse de rotation du moteur (nmot).

11. Procédé selon l'une au moins des revendications 7 à 10, caractérisé en ce que l'accouplement de démarrage (3) est ouvert lorsqu'en fonctionnement en freinage moteur, une valeur absolue d'une vitesse différentielle (|Dv(t)| = |vref(t)-v(t)|) entre une vitesse (vref(t)) d'un essieu non entraîné et la vitesse de marche (v(t)), détectée sur un essieu entraîné dépasse une valeur de vitesse différentielle admissible (Dvzul(SK(t))) (|Dv(t)|>Dvzul(SK(t))).

12. Procédé selon l'une au moins des revendications 1 à 6 précédentes caractérisé en ce qu'une courbe caractéristique marquée d'un convertisseur de couple de rotation, commandable monté en amont de la boîte de vitesses à variation continue, est sélectionnée en fonction de la valeur de l'activité de conduite (SK(t)), déterminée avant le démarrage ou avant l'arrêt du véhicule, et est réglée de manière plus souple, au moins au démarrage avec activité de conduite croissante (SK(t)).

13. Procédé selon la revendication 12, caractérisé en ce qu'un accouplement de pontage de convertisseur, pontant le convertisseur de couple de rotation est ouvert, si la valeur absolue de la vitesse différentielle ($|Dv(t)| = |vref(t)-v(t)|$) entre la vitesse (vref(t)) d'un essieu non entraîné et la vitesse de marche (v(t)), détectée sur un essieu entraîné, dépasse la valeur de la vitesse différentielle admissible (Dvzul(SK(t))), ($|Dv(t)|>Dvzul(SK(t))$).

14. Procédé selon l'une au moins des revendications précédentes caractérisé en ce qu'en cas de dépassement de la valeur de la vitesse différentielle admissible (Dvzul(SK(t)))

- l'accouplement de pontage de convertisseur d'une boîte de vitesses équipée d'un convertisseur de couple de rotation est ouvert,
- un temps de maintien (Th(SK(t))) est fixé pendant lequel une réduction du rapport de transmission ne peut être interdite et
- une augmentation du rapport de transmission est empêchée,

ces fonctions étant rétablies lorsqu'un fonctionnement en traction est détecté et lorsque l'on a des valeurs positives de la variation de la vitesse de marche (v(t)), ainsi que lorsque la valeur absolue de la vitesse différentielle ($|Dv(t)|$) est inférieure à la valeur de la vitesse différentielle admissible (Dvzul(SK(t))), ($|Dv(t)|<Dvzul(SK(t))$).

15. Procédé selon l'une au moins des revendications précédentes caractérisé en ce que les intervalles de temps (T1(SK(t))), (T2(SK(t))) le temps de maintien (Th(SK(t))), et la valeur de la vitesse différentielle admissible (Dvzul(SK(t))) dépendent de l'activité de conduite (SK(t)), les intervalles de temps (T1(SK(t)) et (T2(SK(t))) augmentent lorsque croît l'activité de conduite (SK(t)) et le temps de maintien (Th(SK(t))) et la valeur de la vitesse différentielle admissible (Dvzul(SK(t))) diminuent lorsque croît l'activité de conduite SK(t).

FIG.1

FIG.2

FIG.3

EP 0 588 826 B1

FIG.4

□ AFK1(SKmin)    + AFK 2    ◇ AFK3    △ AFK4    × AFK5 (SKmax)

EP 0 588 826 B1

FIG.5

□WSK1(SKmin)    +WSK3    ◇WSK5(SKmax)

EP 0 588 826 B1